# EUROPÄISCHE PATENTSCHRIFT

(11) **EP 0 750 738 B1**
(45) Veröffentlichungstag und Bekanntmachung des Hinweises auf die Patenterteilung: **09.06.1999**
(21) Anmeldenummer: 95907566.4
(22) Anmeldetag: 19.01.1995
(51) Int. Cl.: G01M 3/20

(54) **TESTGASLECKSUCHER**
TEST GAS LEAK INDICATOR
DISPOSITIF DE RECHERCHE DE FUITE SENSIBLE A UN GAZ TEMOIN

(30) Priorität: 16.03.1994 DE 4408877
(43) Veröffentlichungstag der Anmeldung: 02.01.1997
(73) Patentinhaber: Balzers und Leybold Deutschland Holding Aktiengesellschaft, 63450 Hanau (DE)
(72) Erfinder: BÖHM, Thomas, D-50933 Köln (DE); DÖBLER, Ulrich, D-42929 Wermelskirchen (DE); GROSSE BLEY, Werner, D-53125 Bonn (DE)
(74) Vertreter: Leineweber, Jürgen, Dipl.-Phys.
(86) Internationale Anmeldenummer: EP9500186
(87) Internationale Veröffentlichungsnummer: WO9525267

(56) Entgegenhaltungen:
- EP-A- 0 534 824

## Beschreibung

Die Erfindung bezieht sich auf ein Verfahren zum Betrieb eines Testgaslecksuchers sowie auf einen für die Durchführung dieses Verfahrens geeigneten Testgaslecksucher.

Testgaslecksucher der hier betroffenen Art werden zum Beispiel an eine Prüfkammer angeschlossen, in der sich ein oder mehrere Prüflinge befinden. Für den Fall, daß ein Prüfling leck ist, gelangt im Prüfling befindliches Testgas in die Prüfkammer und von dort aus in den Testgaslecksucher, mit dessen Hilfe es registriert wird. Bei einer weiteren Lecksuchmethode ist der Prüfling selbst mit dem Einlaß des Testgaslecksuchers verbunden. Der Prüfling wird von außen mit Testgas besprüht. Ist er leck, gelangt Testgas in den Prüfling und danach in den Testgaslecksucher.

Das durch den Einlaß des Testgaslecksuchers eintretende, für den Fall des Vorhandenseins eines Lecks Testgas enthaltende Gas kann dem im Lecksucher befindlichen Sensor (Testgasdetektor) unmittelbar zugeführt werden. Bei Helium als Testgas ist der Testgasdetektor üblicherweise ein auf die Masse 4 eingestelltes Massenspektrometer, das einen relativ niedrigen Betriebsdruck hat und deshalb eine Hochvakuumpumpe mit vorgeschalteter Vorvakuumpumpe benötigt. Wird das auf das Vorhandensein von Testgas zu untersuchende Gas dem Massenspektrometer unmittelbar zugeführt, müssen diese Druckverhältnisse berücksichtigt werden. Eine weitere Möglichkeit besteht darin, das zu untersuchende Gas dem Auslaß der Hochvakuumpumpe zuzuführen. Gegebenenfalls vorhandenes Helium gelangt entgegen der Förderrichtung der Hochvakuumpumpe in das Massenspektrometer und wird dort registriert (Gegenstrom-Prinzip).

Die Empfindlichkeit von Testgaslecksuchern der beschriebenen Art ist u.a. durch den internen Testgas- bzw. Heliumuntergrund begrenzt. Die Ursache dieses Untergrundes ist insbesondere Helium aus früheren Messungen, das in Dichtungen und/oder in das Öl der Vorvakuumpumpe hineindiffundiert ist. Aus den Dichtungen und dem Öl langsam austretendes Testgas gelangt entgegen der Förderrichtung der Vakuumpumpen zum Massenspektrometer und verursacht den unerwünschten Untergrund.

Der vorliegenden Erfindung liegt die Aufgabe zugrunde, die Empfindlichkeit der Testgaslecksuche zu verbessern.

Diese Aufgabe wird durch Modulation des Gasstromes im Einlaß des Leckdetektors nach den kennzeichnenden Merkmalen der Patentansprüche gelöst. Durch die Anwendung der Erfindung können nicht modulierte Störungen, insbesondere der nicht modulierte Testgasuntergrund des Gerätes nach dem Prinzip der phasenempfindlichen Gleichrichtung eliminiert werden. Es besteht deshalb die Möglichkeit, sehr kleine Leckraten trotz des Vorhandenseins hoher Untergründe nachzuweisen. Ein weiterer Vorteil des erfindungsgemäßen Verfahrens besteht darin, daß das Zeitverhalten bei sehr kleinen Signalen/ Leckraten deutlich besser ist als beim Stand der Technik.

Weitere Vorteile und Einzelheiten der Erfindung sollen anhand von in den Figuren 1 bis 3 dargestellten Ausführungsbeispielen erläutert werden. Es zeigen
- Figur 1 ein schematisch dargestelltes Ausführungsbeispiel für einen Testgaslecksucher nach der Erfindung sowie
- Figuren 2 und 3 Alternativen für Vorrichtungen zur Modulation des Einlaßgasstromes.

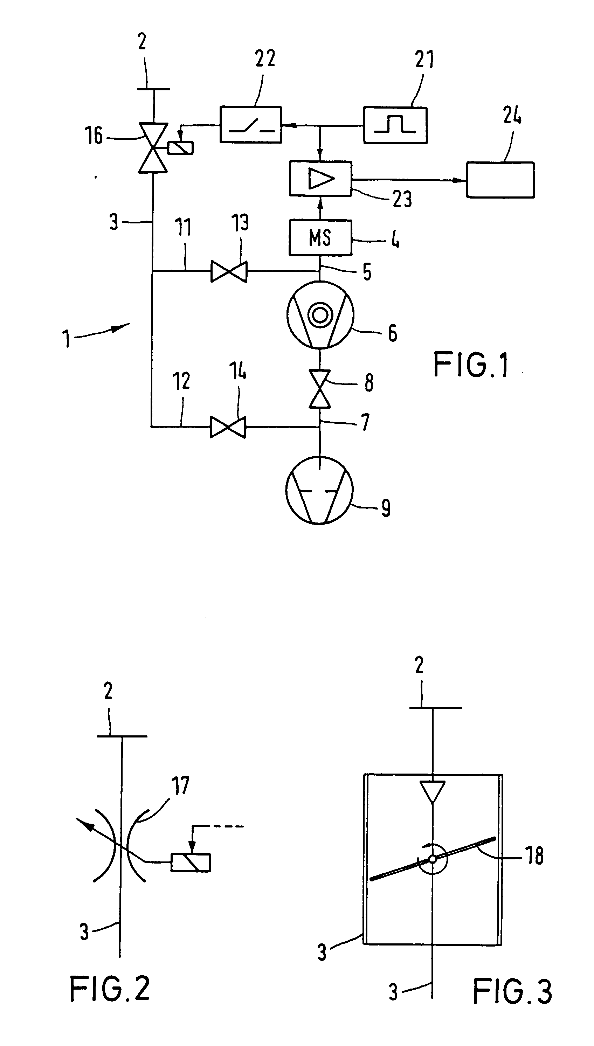

Beim Testgaslecksucher 1 nach Figur 1 sind der Einlaß mit 2, die sich an den Einlaß 2 anschließende Leitung mit 3 und der als Massenspektrometer ausgebildete Testgasdetektor mit 4 bezeichnet. An den Einlaß des Massenspektrometers 4 ist über die Leitung 5 die Hochvakuumpumpe 6 (vorzugsweise eine Turbomolekularvakuumpumpe), angeschlossen. An den Auslaß der Hochvakuumpumpe 6 schließt sich die Leitung 7 mit dem Ventil 8 an, welche mit dem Einlaß der Vorvakuumpumpe 9 in Verbindung steht. An die Leitung 3 sind die Leitungsabschnitte 11, 12 mit den Ventilen 13, 14 angeschlossen. Über die Leitungen 11, 12 gelangt das in den Einlaß 2 eintretende Gas entweder unmittelbar (Leitung 11) oder mittelbar (Leitung 12) in das Massenspektrometer 4. Die Auswahl des Gasweges erfolgt mit Hilfe der Ventile 13, 14. Sind die Ventile 8 und 13 geschlossen, dann kann bei offenem Ventil 14 die Vorvakuumpumpe 9 der Evakuierung des Prüflings oder der Prüfkammer (nicht dargestellt) dienen, welche vor dem Beginn der Lecksuche mit dem Einlaß 2 verbunden werden.

Um den erfindungsgemäßen Betrieb des Testgaslecksuchers 1 zu ermöglichen, befindet sich in der Leitung 3 ein Bauteil, das eine Modulation des durchströmenden Gases ermöglicht. Beim Ausführungsbeispiel nach Figur 1 ist ein Ventil 16 vorgesehen, dessen Öffnungsquerschnitt veränderbar ist. Die Figuren 2 und 3 zeigen eine regelbare Drossel 17 bzw. eine rotierende Drosselklappe 18 in der Leitung 3. Sämtliche Bauteile ermöglichen eine vorzugsweise periodische Einlaßgasstrommodulation.

Figur 1 zeigt, daß zur Betätigung des Ventils 16 ein Schalter 22 vorgesehen ist, der seinerseits vom Frequenzgenerator 21 betätigt wird. Das vom Frequenzgenerator 21 gelieferte Signal wird außerdem einem Verstärker 23 als Referenzsignal zugeführt. Der Verstärker 23 dient der Verarbeitung der vom Testgasdetektor 4 gelieferten Signale. Nach einer Verstärkung und phasenempfindlichen Gleichrichtung entsprechend dem LOCK-IN-Prinzip erfolgt die Signalanzeige. Als Signalanzeige ist der Block 24 dargestellt.

Bei moduliertem Einlaßgasstrom liegt am Ionenfänger des Massenspektrometers ebenfalls ein moduliertes Signal an, das vom synchron arbeitenden Verstärker nach dem LOCK-IN-Prinzip zu einem Gleichspannungssignal verarbeitet und bei 24 angezeigt wird. Insbesondere von einem Heliumuntergrund verursachte Störungen werden dadurch eliminiert. Extrem kleine Leckraten können noch festgestellt werden. Die vom Frequenzgenerator erzeugte Signalfrequenz f sollte kleiner als der Kehrwert der Zeitkonstanten t des Vakuumsystems sein, damit das Signal am Ionenfänger noch eine (hinreichend große) Modulation aufweist.

## Patentansprüche

1. Verfahren zum Betrieb eines Testgaslecksuchers (1) mit einem Gaseinlaß (2) und einem testgasempfindlichen Detektor (4), bei welchem ein in den Einlaß (2) gelangender, im Falle des Vorhandenseins eines Lecks Testgas enthaltender Gasstrom dem Detektor (4) ganz oder teilweise zugeführt wird, dadurch gekennzeichnet, daß der Gasstrom vorzugsweise periodisch moduliert wird und daß die Signale des Testgasdetektors (4) synchron mit der Modulation des Gasstromes verarbeitet werden.

2. Verfahren nach Anspruch 1, dadurch gekennzeichnet, daß die Modulation des Gasstromes und die Verarbeitung der Signale des Testgasdetektors nach dem LOCK-IN-Prinzip erfolgen.

3. Verfahren nach Anspruch 1 oder 2, dadurch gekennzeichnet, daß der gegebenenfalls Testgas enthaltende Gasstrom dem Testgasdetektor (4) entweder unmittelbar oder mittelbar - im Gegenstrom einer an den Testgasdetektor (4) angeschlossenen Hochvakuumpumpe (6) - zugeführt wird.

4. Verfahren nach einem der Ansprüche 1, 2 oder 3, dadurch gekennzeichnet, daß die Modulations- und Signalverarbeitungsfrequenz nicht im Bereich der Netzfrequenz oder im Bereich der Zeitkonstanten des Vakuumsystems liegt.

5. Für die Durchführung des Verfahrens nach einem der Patentansprüche 1, 2, 3 oder 4 geeigneter Testgaslecksucher (1) mit einem Einlaß (2) und einem Testgasdetektor (4), dadurch gekennzeichnet, daß einlaßseitig eine Vorrichtung (16, 17, 18) zur Modulation des Einlaßgasstromes vorgesehen ist.

6. Testgaslecksucher nach Anspruch 5, dadurch gekennzeichnet, daß als Vorrichtung zur Modulation des Einlaßgasstromes ein regelbares Ventil (16), eine regelbare Drossel (17) oder eine rotierende Drosselklappe (18) vorgesehen sind.

7. Lecksucher nach Anspruch 5 oder 6, dadurch gekennzeichnet, daß der Testgasdetektor (4) ein Massenspektrometer ist, dessen Einlaß mit einer Hochvakuumpumpe (6) in Verbindung steht und an dessen Signalausgang ein Verstärker (23) angeschlossen ist.

8. Lecksucher nach Anspruch 7, dadurch gekennzeichnet, daß ein Frequenzgenerator (21) zur Steuerung des Bauteiles (16, 17, 18) und zur Steuerung des Verstärkers (23) vorgesehen ist.

## Claims

1. A method for operating a test gas leak locator (1) with a gas inlet (2) and a test gas-sensitive detector (4), in which a gas flow, which enters the gas inlet (2) and in cases where a leak is present contains test gas, is fully or partially supplied to the detector (4), characterised in that the gas flow is preferably periodically modulated and the signals of the test gas detector (4) are processed synchronously with the modulation of the gas flow.

2. A method according to claim 1, characterised in that the modulation of the gas flow and the processing of the signals of the test gas detector are effected according to the LOCK-IN principle.

3. A method according to claim 1 or 2, characterised in that the gas flow, which may contain test gas, is supplied to the test gas detector (4) either directly or indirectly - in the counterflow direction of a high vacuum pump (6) connected to the test gas detector (4).

4. A method according to one of claims 1, 2 or 3, characterised in that the modulation and signal processing frequency does not lie in the region of the mains frequency or in the region of the time constants of the vacuum system.

5. A test gas leak locator (1) suitable for carrying out the method according to one of claims 1, 2, 3 or 4 with an inlet (2) and a test gas leak detector (4), characterised in that a device (16, 17, 18) for modulating the inlet gas flow is provided on the inlet side.

6. A test gas leak locator according to claim 5, characterised in that a controllable valve (16), a controllable throttle (17) or a rotating throttle valve (18) are provided as the device for modulating the inlet gas flow.

7. A test gas leak locator according to claim 5 or 6, characterised in that the test gas detector (4) is a mass spectrometer, whose inlet is connected to a high vacuum pump (6) and to whose signal outlet an amplifier (23) is connected.

8. A leak locator according to claim 7, characterised in that a frequency generator (21) is provided for controlling the component (16, 17, 18) and for controlling the amplifier (23).

## Revendications

1. Procédé de fonctionnement d'un détecteur de fuite de gaz de référence (1) équipé d'une admission de gaz (2) et d'un détecteur (4) sensible au gaz de référence, dans lequel un courant de gaz contenant un gaz de référence, dans le cas de la présence d'une fuite, est amené en totalité ou partiellement au détecteur (4), caractérisé en ce que le courant de gaz est modulé de préférence périodiquement et en ce que les signaux du détecteur de gaz de référence (4) sont traités de façon synchrone à la modulation du courant de gaz.

2. Procédé selon la revendication 1, caractérisé en ce que la modulation du courant de gaz et le traitement des signaux du détecteur de gaz de référence s'effectuent selon le principe LOCK-IN.

3. Procédé selon la revendication 1 ou 2, caractérisé en ce que le courant de gaz contenant éventuellement le gaz de référence est amené au détecteur de gaz de référence (4), soit directement, soit indirectement, à contre-courant d'une pompe à vide poussé (6) reliée au détecteur de gaz de référence (4).

4. Procédé selon l'une quelconque des revendications 1, 2 ou 3, caractérisé en ce que la fréquence de modulation et de traitement de signaux ne se trouve pas à proximité de la fréquence du secteur, ni à proximité des constantes de temps du système de vide.

5. Détecteur de fuite de gaz de référence (1) en vue de la mise en oeuvre du procédé selon l'une quelconque des revendications 1, 2, 3 ou 4, équipé d'une admission (2) et d'un détecteur de gaz de référence (4), caractérisé en ce que, côté admission, est prévu un dispositif (16, 17, 18) de modulation du courant de gaz d'admission.

6. Détecteur de fuite de gaz de référence selon la revendication 5, caractérisé en ce qu'en tant que dispositif de modulation du courant de gaz d'admission sont prévus une soupape réglable (16), un papillon réglable (17) ou un papillon de commande rotatif (18).

7. Détecteur de fuite selon la revendication 5 ou 6, caractérisé en ce que le détecteur de gaz de référence (4) est un spectromètre de masse, dont l'admission est reliée à une pompe à vide poussé (6) et à la sortie de signal duquel est relié un amplificateur (23).

8. Détecteur de fuite selon la revendication 7, caractérisé en ce qu'un générateur de fréquence (21) est prévu en vue de la commande du dispositif (16, 17, 18) ,et en vue de la commande de l'amplificateur (23).
